# FASCICULE DE BREVET EUROPEEN

(11) **EP 4 015 262 B1**
(45) Date de publication et mention de la délivrance du brevet: **15.07.2026**
(21) Numéro de dépôt: 21214169.1
(22) Date de dépôt: 13.12.2021
(51) Int. Cl.: B60G 15/06, B60G 13/00, B62D 25/08

(54) **JAMBE DE FORCE DE SUSPENSION DE VEHICULE**
FEDERBEIN EINER FAHRZEUGAUFHÄNGUNG
STRUT FOR VEHICLE SUSPENSION

(30) Priorité: 18.12.2020 FR 2013601
(43) Date de publication de la demande: 22.06.2022
(73) Titulaire: Renault s.a.s, 92100 Boulogne Billancourt (FR)
(72) Inventeur: CUBAUD, OLIVIER, 78360 MONTESSON (FR); ANGELINI, Jerome, 95600 Eaubonne (FR)
(74) Mandataire: Renault Group

(56) Documents cités:
- WO-A1-2020/211897
- DE-A1- 102017 009 601
- DE-A1- 3 501 106
- FR-A1- 2 225 647
- US-A1- 2002 135 111

## Description

### Domaine technique de l'invention

La présente invention concerne une jambe de force destinée à équiper une suspension d'une roue de véhicule automobile.

L'invention concerne plus particulièrement une jambe de force destinée par exemple à équiper une suspension d'une roue directrice de véhicule automobile.

### Arrière-plan technique

L'état de la technique comporte les documents WO-2020/211897-A1, US-2002-135111-A1, DE-35.01.106-A1, DE 10.2017.009601-A1 et FR-2.225.647-A1.

La présente invention concerne les dispositifs de suspension de type Mac-Pherson ou pseudo Mac-Pherson qui sont montés sur les essieux directeurs des véhicules automobiles, particulièrement les jambes de force et leur rôle dans l'équilibre du système de direction. L'intérêt de ce type de suspension est qu'il présente un nombre réduit d'éléments et un encombrement limité par rapport à d'autres systèmes.

De manière connue, une jambe de force destinée à équiper une suspension d'une roue de véhicule automobile, comporte :
- un amortisseur équipé d'une tige axiale télescopique comportant un tronçon d'extrémité supérieure qui coopère avec un élément structurel du véhicule automobile;
- un ressort hélicoïdal qui entoure la tige télescopique ;
- une coupelle supérieure d'appui axial de l'extrémité supérieure du ressort hélicoïdal ;
- une butée tournante qui est interposée axialement entre la coupelle supérieure et l'élément structurel, et qui comporte une bague supérieure qui est fixe par rapport à l'élément structurel et une bague inférieure tournante qui reçoit l'effort du ressort hélicoïdal ;
- un bloc de choc qui entoure la tige télescopique et dont un tronçon supérieur transmet son effort à l'élément structurel ;
- un ensemble de filtration qui comporte une enveloppe cylindrique radialement extérieure qui est fixée à l'élément structurel, un bloc filtrant intermédiaire, et un élément radialement intérieur de fixation auquel est fixé le tronçon d'extrémité supérieure de la tige télescopique ;
- une contre-butée qui est fixée au tronçon d'extrémité supérieure de la tige télescopique, au-dessus de l'élément radialement intérieur de fixation de l'ensemble de filtration et qui est apte à coopérer avec une portion de face supérieure en vis-à-vis de l'élément structurel.

L'invention vise à proposer une conception intégrée et compacte des différents composants de la partie supérieure d'une telle jambe de force qui en facilite notamment l'assemblage, le montage, et la maintenance.

### Résumé de l'invention

L'invention propose une jambe de force du type mentionné précédemment, ladite jambe de force comporte
- un amortisseur équipé d'une tige axiale télescopique comportant un tronçon d'extrémité supérieure qui coopère avec un élément structurel du véhicule automobile ;
- un ressort hélicoïdal qui entoure la tige télescopique ;
- une coupelle supérieure d'appui axial de l'extrémité supérieure du ressort hélicoïdal ;
- une butée tournante qui est interposée axialement entre la coupelle supérieure et l'élément structurel, et qui comporte une bague supérieure qui est fixe par rapport à l'élément structurel et une bague inférieure tournante qui reçoit l'effort du ressort hélicoïdal ;
- un bloc de choc qui entoure la tige télescopique et dont un tronçon supérieur transmet son effort à l'élément structurel ;
- un ensemble de filtration qui comporte une enveloppe cylindrique radialement extérieure qui est fixée à l'élément structurel, un bloc filtrant intermédiaire, et un élément radialement intérieur de fixation auquel est fixé le tronçon d'extrémité supérieure de la tige télescopique ;
- une contre-butée qui est fixée au tronçon d'extrémité supérieure de la tige télescopique, au-dessus de l'élément radialement intérieur de fixation de l'ensemble de filtration et qui est apte à coopérer avec une portion de face supérieure en vis-à-vis de l'élément structurel ; ladite jambe de force comportant un support multifonctions en une seule pièce qui comporte :
- une cavité de filtration ouverte axialement vers le haut dans laquelle est fixée l'enveloppe extérieure de l'ensemble de filtration ;
- une cavité de choc ouverte axialement vers le bas dans laquelle est monté le tronçon supérieur du bloc de choc ;
- un logement dans lequel est montée la butée tournante ;
- le support multifonctions comportant un bossage latéral d'appui axial du support multifonctions qui est apte à coopérer avec une portion de face inférieure en vis-à-vis de l'élément structurel, et telle que la jambe de force comporte un élément supérieur qui applique un effort de précontrainte au bloc filtrant.

Selon d'autres caractéristiques de l'invention :
- le support multifonctions comporte :
   -- un fut cylindrique de filtration, ouvert axialement vers le haut, qui est constitué d'une jupe cylindrique latérale et d'une cloison radiale qui délimitent latéralement et axialement vers le bas la cavité de filtration, et dont la cloison radiale est percée centralement pour le passage du tronçon d'extrémité supérieure de la tige télescopique ;

   -- un fut cylindrique de choc, ouvert axialement vers le bas, qui est constitué d'une jupe cylindrique latérale et de ladite cloison radiale qui délimitent latéralement et axialement vers le haut la cavité de choc ;
   -- le bossage latéral d'appui axial du support multifonctions sur l'élément structurel, qui s'étend radialement vers l'extérieur depuis le fut cylindrique de filtration ;
   -- une collerette latérale qui s'étend radialement vers l'extérieur, dont une face inférieure délimite axialement vers le haut le logement latéral et en vis à vis de laquelle est agencée la bague supérieure de la butée tournante ;
   -- une pièce annulaire complémentaire qui est rapportée sous la collerette latérale et qui, avec la collerette latérale, délimite le logement ;
- la butée tournante est agencée axialement en-dessous de la cavité de filtration ;
- la cavité de choc comporte des moyens de fixation du tronçon supérieur du bloc de choc ;
- le bloc de choc est réalisé en une seule pièce avec le bloc filtrant qu'il prolonge axialement vers le bas ;
- l'élément supérieur qui applique un effort de précontrainte au bloc filtrant est une rondelle qui est fixée, par exemple par emboîtement élastique, sur l'extrémité supérieure du fut de filtration et dont la face inférieure applique un effort de précontrainte au bloc filtrant ;
- l'élément supérieur qui applique un effort de précontrainte au bloc filtrant est une portion

annulaire de l'élément structurel dont la face inférieure applique un effort de précontrainte au bloc filtrant ;
- la butée tournante est une butée à billes qui est logée dans le logement entre la collerette latérale et la pièce annulaire complémentaire qui est rapportée sous la collerette latérale ;
- la butée tournante est une butée à billes qui est logée verticalement en-dessous et au droit du bloc filtrant ;
- l'enveloppe cylindrique radialement extérieure de l'ensemble de filtration est une douille qui est montée sertie axialement à l'intérieur du fut de filtration du support multifonctions.

### Brève descriptions des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une vue schématique de côté d'un véhicule équipé d'une jambe de force ;
[Fig.2] - la figure 2 est une vue de détail à plus grande échelle en coupe par un plan axial qui représente l'extrémité supérieure d'une jambe de force réalisée selon un premier exemple de réalisation de l'invention dans lequel la butée tournante est une butée à billes ;
[Fig.3] - la figure 3 est une vue analogue à celle de la figure 2, qui représente un deuxième exemple de réalisation d'une jambe de force selon l'invention dans lequel le support multifonctions est associé à une butée tournante à billes ;
[Fig.4] - la figure 4 est une vue analogue à celle de la figure 3, qui représente un troisième exemple de réalisation d'une jambe de force selon l'invention dans lequel le support multifonctions est associé à une butée tournante à billes.

### Description détaillée de l'invention

Pour la description de l'invention et la compréhension des revendications, on adoptera à titre non limitatif et sans référence limitative à la gravité terrestre les orientations verticale, longitudinale et transversale selon le repère V, L, T - indiqué aux figures et associé au véhicule automobile dans son ensemble - dont les axes longitudinal L et transversal T s'étendent dans un plan horizontal.

La direction verticale est utilisée à titre de repère purement géométrique comme étant une direction orthogonale à la route sur laquelle se trouve le véhicule.

Pour la description, on utilisera les termes haut, bas, supérieur, inférieur, etc. en référence à l'orientation des figures et de l'axe « A » qui est orienté de bas en haut.

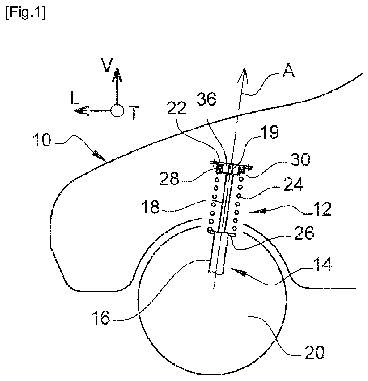

On a représenté à la figure 1 l'avant 10 d'un véhicule automobile véhicule vu de côté et la jambe de force avant gauche 12. Tout ce qui est décrit ci-après s'applique aux deux côtés du train avant du véhicule.

La jambe de force 12 comporte un amortisseur 14 d'axe « A » comprenant un corps 16 dans lequel une tige 18 est montée télescopique axialement selon l'axe A.

Une extrémité inférieure du corps 16 est liée avec une roue 20 directrice associée du véhicule, par exemple par l'intermédiaire d'une chape (Non représentée), tandis que le tronçon 19 d'extrémité supérieure libre de la tige 18 est destiné à être lié à un élément structurel suspendu 22 du véhicule, tel qu'un élément de carrosserie ou un élément de caisse, ou tout composant rapporté et fixé sur un tel élément.

La jambe de force 12 est aussi équipée d'un ressort 24 hélicoïdal de suspension qui permet d'absorber élastiquement les chocs. Le ressort 24 présente un axe central dit "axe d'action" le long duquel est dirigée la force élastique du ressort 24.

Le ressort 24 est enfilé autour de la tige 18 d'amortisseur et ces deux éléments sont globalement coaxiaux.

Le ressort 24 est monté comprimé axialement entre une coupelle inférieure 26 et une coupelle supérieure 28.

La coupelle inférieure 26 est ici fixée au corps 16 de l'amortisseur 14, tandis que la coupelle supérieure 28 est portée par l'élément structurel 22 du véhicule.

S'agissant d'une jambe de force 12 associée à une roue 20 directrice, la coupelle supérieure 28 est liée à l'élément structurel 22 par l'intermédiaire d'une butée tournante 30 qui est ici représentée sous la forme d'une butée à billes, ou bien en variante une butée comportant un anneau de frottement.

La butée tournante 30 est plus particulièrement interposée axialement entre la coupelle supérieure 28 et l'élément structurel 22.

La butée tournante 30 permet ainsi de faire tourner le ressort 24 de suspension par rapport à l'élément structurel lors du braquage de la roue 10.

La jambe de force 12 comporte aussi un l'ensemble de filtration 36 qui réalise la fixation du tronçon 19 d'extrémité supérieure libre de la tige 18 sur l'élément structurel 22. L'ensemble de filtration 36 a pour fonction d'absorber certaines vibrations de la tige 18 pour éviter qu'elles ne soient transmises à la structure du véhicule, par exemple pour éviter l'apparition de bruits parasites.

### Premier exemple de réalisation

### Figure 2

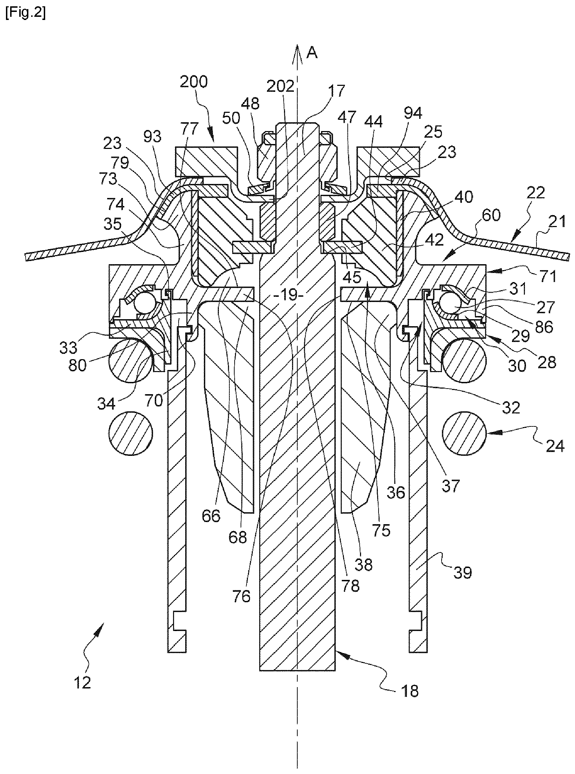

La figure 2 représente une jambe de force 12 dont la partie supérieure est fixée sur un élément structurel 22 qui présente une forme générale d'une coupole qui comporte une jupe latérale radialement extérieure 21 qui prolonge une joue supérieure radiale et annulaire 23 qui délimite un trou central 25.

La butée tournante comporte une bague inférieure 29 qui est montée tournante par rapport à une bague supérieure 31 qui est fixe par rapport à l'élément structurel 22.

La bague inférieure tournante 29 reçoit ainsi l'effort du ressort 24 à travers la coupelle supérieure 28 et une pièce annulaire intermédiaire 32. La bague inférieure 29 est destinée à tourner de manière solidaire avec le ressort 24 de suspension autour de l'axe principal du ressort 24.

La jambe de force 12 comporte un support multifonctions 60 selon l'invention qui est associé à la butée tournante 30 ici du type à billes 27 qui sont interposées axialement entre la bague inférieure tournante 29 et la bague supérieure fixe 31.

On a représenté un bloc inférieur de choc 38 qui entoure la tige télescopique 18 et dont le tronçon supérieur 37 transmet son effort à l'élément structurel 22.

Le bloc de choc 38 est réalisé dans un matériau déformable élastiquement apte à être comprimé axialement.

La partie supérieure de la jambe de force 12 peut aussi comporter des moyens 39 (Ici un fourreau axial tubulaire) pour l'accrochage d'un soufflet (Non représenté) de protection de la tige télescopique 18 et du bloc de choc 38.

L'ensemble de filtration 36 comporte une enveloppe cylindrique tubulaire axiale 40 radialement extérieure qui est fixée au support multifonctions 60, un bloc filtrant 42 radialement intermédiaire, et un élément radialement intérieur de fixation 44 auquel est fixé le tronçon 19 d'extrémité supérieure de la tige télescopique 18.

Le bloc filtrant 42 est par exemple un bloc en matériau élastomère naturel ou synthétique qui est apte à absorber certaines vibrations, et qui est ici fixé au tronçon 19 d'extrémité supérieure de la tige 18 par l'intermédiaire d'une portion radialement intérieure, en forme d'anneau plat percé centralement, de l'élément radialement intérieur de fixation 44 de l'ensemble de filtration 36.

Le tronçon 19 d'extrémité libre supérieure de la tige télescopique 18 comporte une extrémité filetée 17 qui est enfilée dans l'anneau plat 44 jusqu'à ce qu'un épaulement 45 de la tige vienne en butée contre l'anneau plat 44.

Le tronçon 19 d'extrémité libre supérieure de la tige télescopique 18 est fixé à l'anneau plat 44 au moyen d'une entretoise axiale de serrage axial 47 qui est traversée axialement par le tronçon 19 d'extrémité supérieure de la tige télescopique 18.

L'ensemble de filtration 36 est soumis uniquement aux efforts transitant par la tige télescopique 18 de l'amortisseur 16. L'ensemble de filtration 36 ne reçoit aucun effort provenant du ressort hélicoïdal 24.

L'enveloppe cylindrique tubulaire axiale 40 de l'élément filtrant 36 est par exemple une douille métallique, comme l'élément radialement intérieur de fixation 44.

L'élément filtrant 36 est ici réalisé par surmoulage du bloc filtrant intermédiaire 42 sur l'enveloppe cylindrique tubulaire axiale 40 et l'élément radialement intérieur de fixation 44. Conformément aux enseignements de l'invention, la partie supérieure de la jambe de force 12 comporte un support multifonctions 60 en une seule pièce, un élément supérieur 94 qui applique un effort de précontrainte au bloc filtrant 42.

Le support multifonctions 60 est ici réalisé en une seule pièce moulée en matière plastique. Le support multifonctions 60 en une seule pièce comporte :
- une cavité supérieure 66 de filtration qui est ouverte axialement vers le haut et dans laquelle est fixée l'enveloppe extérieure 40 de l'ensemble de filtration 36 ;
- une cavité inférieure de choc 68 qui est ouverte axialement vers le bas et dans laquelle est monté le tronçon supérieur 37 du bloc de choc 38 ;
- un logement latéral 70 dans lequel est montée la butée tournante 30 ;
- et un bossage latéral 73 d'appui axial du support multifonctions 60 qui est apte à coopérer avec une portion de face inférieure en vis à vis de l'élément structurel 22-23.

Le support multifonctions 60 comporte un fut cylindrique supérieur, dit de filtration, qui est constitué d'une jupe cylindrique latérale supérieure 74 et d'une cloison radiale inférieure annulaire 76 qui délimitent latéralement et axialement vers le bas la cavité supérieure de filtration 66.

La cavité de choc peut comporter des moyens d'accrochage du tronçon supérieur 37 du bloc de choc 38 et/ou ce dernier peut y être emboîté élastiquement.

Le bossage latéral 73 d'appui axial du support multifonctions 60 sur l'élément structurel s'étend radialement vers l'extérieur depuis le fut cylindrique supérieur de filtration, ici à la partie d'extrémité supérieure de la jupe cylindrique latérale supérieure 74

La cloison radiale inférieure annulaire 76 est percée centralement par un trou 78 pour le passage du tronçon 19 d'extrémité supérieure de la tige télescopique 18.

La cloison radiale inférieure annulaire 76 comporte une face inférieure 75 et une face supérieure 77.

En dessous de la cloison radiale inférieure annulaire 76, le support multifonctions 60 comporte un fut cylindrique inférieur, dit de choc, qui est constitué d'une jupe cylindrique latérale inférieure 80 et de ladite cloison radiale annulaire 76 qui délimitent latéralement et axialement vers le haut la cavité de choc 68 (Qui est aussi appelée le bol de saturation de la butée de choc).

Dans cet exemple de réalisation, la cloison radiale inférieure annulaire 76, et la jupe cylindrique latérale inférieure 80 sont sensiblement de mêmes diamètre et épaisseur et sont sensiblement alignées axialement.

La cloison radiale inférieure annulaire 76 se présente comme une cloison intermédiaire qui divise en deux la cavité interne du support multifonctions 60 pour délimiter axialement les deux cavités supérieure de filtration 66 et inférieure de choc 68.

Ici verticalement sensiblement au même niveau que la cloison radiale inférieure annulaire 76, le support multifonctions 60 comporte une collerette latérale 71 qui s'étend radialement vers l'extérieur à partir de la paroi latérale externe du support multifonctions 60 et dont une face inférieure délimite axialement vers le haut le logement latéral 70 et en vis à vis de laquelle est agencée la bague supérieure 31 de la butée tournante.

La collerette latérale annulaire 71 comporte une jupe latérale radialement extérieure 86 de forme tubulaire qui entoure latéralement la butée tournante 30.

La butée tournante 30 est ainsi agencée axialement globalement en-dessous de la cavité de filtration 66, c'est-à-dire globalement au niveau de la cloison radiale inférieure annulaire 76 du support multifonctions 60.

Une pièce annulaire complémentaire 32 est rapportée sous la collerette latérale annulaire 71 qui, avec la collerette latérale annulaire 71, délimite le logement 70.

La pièce annulaire complémentaire 31 comporte une portion annulaire radiale 33 qui est décalée axialement vers le bas par rapport à la collerette latérale annulaire 71, et une portion axiale tubulaire 34 qui s'étend axialement vers le bas et vers le haut par rapport à la portion annulaire radiale 33.

A son extrémité axiale supérieure, la portion axiale tubulaire 34 comporte des moyens 35 d'accrochage de la pièce annulaire complémentaire 32 sous la collerette latérale annulaire 71.

Ainsi, la butée tournante 30 forme un tout structurel sous la forme d'un sous-ensemble qui est intégré au support multifonctions 60 et agencé à la partie supérieure de la jambe de force 12.

La pièce annulaire complémentaire qui est rapportée sous la collerette latérale 71 pour délimiter le logement latéral 70 délimite aussi un logement inférieur ouvert axialement vers le bas dans lequel est agencée la coupelle supérieure 28.

En position assemblée des composants, l'ensemble de filtration 36 est logé dans la cavité de filtration 66 dans laquelle il est emboîté à force par sertissage de son enveloppe cylindrique extérieure 40 à l'intérieur de la jupe cylindrique latérale supérieure 74.

La jambe de force 12 comporte un élément supérieur 94 qui applique un effort de précontrainte au bloc filtrant 42.

L'élément supérieur 94 est une rondelle qui - à titre non limitatif - est par exemple fixée par emboîtement élastique sur des crochets agencés à l'extrémité supérieure libre du fut de filtration 74.

La rondelle 94 comporte une face annulaire inférieure qui s'étend en regard d'une portion supérieure en vis-à-vis du bloc filtrant 36.

En position assemblée de la rondelle 94 sur le support multifonctions 60, sa face inférieure annulaire applique un effort de précontrainte déterminé au bloc filtrant 42.

La valeur de l'effort de précontrainte peut être modifiée en modifiant les dimensions de la rondelle supérieure 94.

La rondelle supérieure 94 qui applique l'effort de précontrainte se prolonge radialement vers l'extérieur par une joue radiale 93 qui épouse le profil externe convexe 79 du bossage latéral d'appui axial 73 du support multifonctions 60.

Ainsi, la joue radiale 93 est interposée axialement entre la joue supérieure radiale et annulaire 23 de fixation de l'élément structurel 22 et le bossage latéral d'appui axial 73 du support multifonctions 60

Une contre-butée annulaire 200 de la jambe de force 12 - qui est fixée au tronçon d'extrémité supérieure 19 de la tige télescopique 18 au-dessus de l'élément radialement intérieur 44 de fixation de l'ensemble de filtration 36 - est apte à coopérer avec une portion de face supérieure en vis-à-vis de la joue supérieure radiale et annulaire 23 en vis-à-vis de fixation de l'élément structurel 22.

Une portion annulaire radialement interne 202 de fixation de la contre-butée 200 est traversée axialement par le tronçon d'extrémité supérieure 19 de la tige télescopique 18.

Le tronçon 19 d'extrémité libre supérieure de la tige télescopique 18 comporte une extrémité libre filetée 17 qui est enfilée à travers la portion 202 de fixation jusqu'à ce que la face annulaire d'extrémité supérieure de l'entretoise 47 vienne en butée contre la portion annulaire radialement interne 202 de fixation de la contre-butée 200

Le tronçon 19 d'extrémité libre supérieure de la tige télescopique 18 est fixé à la portion annulaire radialement interne 202 et à l'élément radialement intérieur 44 de fixation de l'ensemble de filtration 36 au moyen d'un écrou 48 de serrage axial qui est vissé sur l'extrémité filetée 17 de la tige télescopique 18, ici avec interposition d'une rondelle 50 qui est par exemple une rondelle qui évite tout risque de desserrage de l'écrou 48. L'assemblage des composants et sous-ensembles 38, 18+36, 30 et 94 et leur montage sur le support multifonctions 60 peuvent être effectués dans un premier temps, puis cet ensemble est introduit axialement de bas en haut à travers le trou central 25 de la joue supérieure radiale et annulaire 23 de fixation de l'élément structurel 22.

Pour la fixation axiale de cet ensemble - sur l'élément structurel 22, la jambe de force 12, on vient ensuite fixer la contre-butée 200 au moyen de l'écrou 48.

Le bloc de choc 38 transmet son effort à l'élément structurel 22, 23 par l'intermédiaire du support multifonctions 60 et de la rondelle supérieure 94.

Le ressort 24 transmet son effort à l'élément structurel 22, 23 par l'intermédiaire de la butée tournante 30, du support multifonctions 60 et de la rondelle supérieure 94.

L'amortisseur hydraulique transmet son effort à l'élément structurel 22, 23 par l'intermédiaire de la tige 18, du bloc filtrant 42, du support multifonctions 60 et de la rondelle supérieure 94.

### Deuxième exemple de réalisation

### Figure3

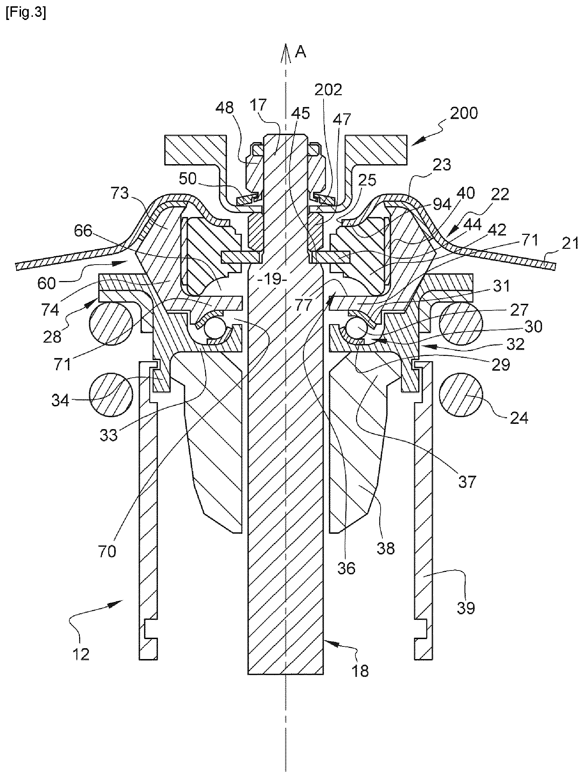

Par comparaison avec le premier exemple de réalisation, dans le deuxième exemple de réalisation représenté à la figure 3, le support multifonctions 60 comporte seulement :
- son fut cylindrique de filtration 74 constitué de la jupe cylindrique latérale ;
- et le bossage latéral 73 d'appui axial du support multifonctions 60 sur l'élément structurel 22, 23, qui s'étend radialement vers l'extérieur depuis le fut cylindrique de filtration 74.

La collerette latérale 71 s'étend ici radialement vers l'intérieur.

La collerette latérale 71 délimite la cavité supérieure de filtration 68 axialement vers le bas. Une face inférieure de la collerette latérale 71 délimite axialement vers le haut le logement latéral 70 et en vis à vis de laquelle est agencée la bague supérieure 31 de la butée tournante 30.

La pièce annulaire complémentaire 32 qui est rapportée sous la collerette latérale 71 et qui, avec la collerette latérale 71, délimite le logement latéral (70) s'étend ici radialement vers l'intérieur et elle porte le fourreau tubulaire 39 pour l'accrochage d'un soufflet (Non représenté) de protection de la tige télescopique 18 et du bloc de choc 38.

Les moyens d'accrochage de la pièce annulaire complémentaire 32 sous la collerette latérale 71 du support multifonctions 60 ne sont pas représentés à la figure 3.

Le tronçon supérieur 37 du bloc de choc 38 est retenu axialement dans la cavité de choc 68 qui est ici formée à la partie inférieure de la pièce annulaire complémentaire 32.

La butée tournante 30 est agencée axialement et radialement en-dessous de la cavité de filtration 66, au droit du bloc filtrant 42.

L'élément supérieur qui applique un effort de précontrainte au bloc filtrant 42 est ici une portion annulaire de l'élément structurel 22 dont la face inférieure applique un effort de précontrainte au bloc filtrant 42

Plus précisément, la joue supérieure radiale et annulaire 23 se prolonge radialement vers l'intérieur par une rondelle 94 - qui délimite le trou central 25 - et qui s'étend au-dessus de la face supérieure du bloc filtrant 42.

Ainsi, la face inférieure de la rondelle 94 applique un effort de précontrainte au bloc filtrant 42.

Le bloc de choc 38 transmet son effort à l'élément structurel 22, 23 par l'intermédiaire de la butée tournante 30, du support multifonctions 60 et de la rondelle supérieure 94.

Le ressort 24 transmet son effort à l'élément structurel 22, 23 par l'intermédiaire de la butée tournante 30, du support multifonctions 60 et de la rondelle supérieure 94.

L'amortisseur hydraulique transmet son effort à l'élément structurel 22, 23 par l'intermédiaire de la tige 18, du bloc filtrant 42, du support multifonctions 60 et de la rondelle supérieure 94.

### Troisième exemple de réalisation

### Figure4

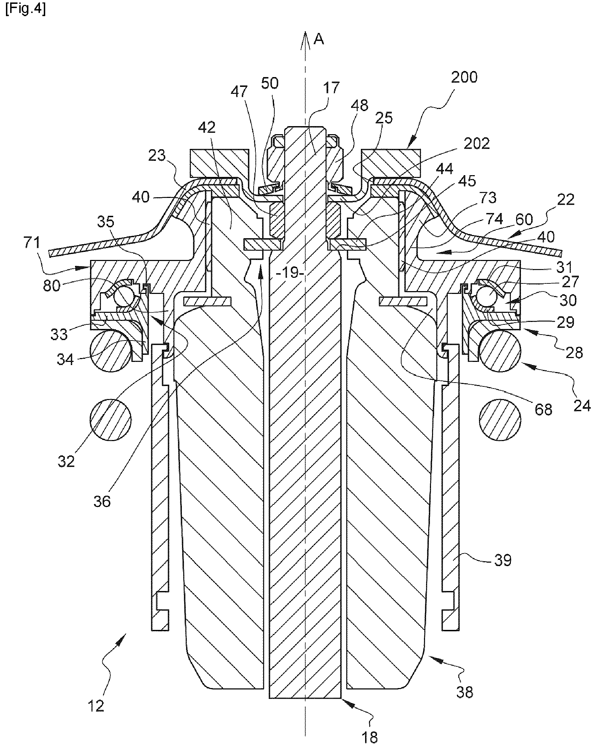

Par comparaison avec le premier exemple de réalisation, dans le troisième exemple de réalisation représenté à la figure 4, le support multifonctions 60 ne comporte pas de cloison radiale interne qui délimite entre elles les cavités supérieure de filtration 66 et inférieure 68 de choc.

Le support multifonctions 60 est étagé intérieurement et son tronçon inférieur 80 de plus grand diamètre délimite la cavité de choc 68.

Les deux étages du support multifonctions 60 sont délimités par une face annulaire inférieure 75.

Le bloc de choc 38 et le bloc filtrant 42 sont réalisés en une seule pièce, et le tronçon supérieur 37 du bloc de choc 38 est surmoulé autour d'une rondelle métallique radialement extérieure 120 qui est apte à coopérer avec la face annulaire inférieure 75.

Le bloc de choc 38 transmet son effort à l'élément structurel 22, 23 par l'intermédiaire du bloc filtrant 42, du support multifonctions 60 et de la rondelle supérieure 94.

Le ressort 24 transmet son effort à l'élément structurel 22, 23 par l'intermédiaire de la butée tournante 30, du support multifonctions 60 et de la rondelle supérieure 94.

L'amortisseur hydraulique transmet son effort à l'élément structurel 22, 23 par l'intermédiaire de la tige 18, du bloc filtrant 42, du support multifonctions 60 et de la rondelle supérieure 94.

## Revendications

1. Jambe de force (12) destinée à équiper une suspension d'une roue de véhicule automobile, la jambe de force (12) comportant :
- un amortisseur (16) équipé d'une tige axiale télescopique (18) comportant un tronçon (19) d'extrémité supérieure qui coopère avec un élément structurel (22, 23) du véhicule automobile ;
- un ressort hélicoïdal (24) qui entoure la tige télescopique (18) ;
- une coupelle supérieure (28) d'appui axial de l'extrémité supérieure du ressort hélicoïdal (24) ;
- une butée tournante (30) qui est interposée axialement entre la coupelle supérieure (28) et l'élément structurel (22, 23), et qui comporte une bague supérieure (31) qui est fixe par rapport à l'élément structurel (22, 23) et une bague inférieure (29) tournante qui reçoit l'effort du ressort hélicoïdal (24) ;
- un bloc de choc (38) qui entoure la tige télescopique (18) et dont un tronçon supérieur (37) transmet son effort à l'élément structurel (22, 23) ;
- un ensemble de filtration (36) qui comporte une enveloppe cylindrique radialement extérieure (40) qui est fixée à l'élément structurel (22, 23), un bloc filtrant intermédiaire (42), et un élément radialement intérieur (44) de fixation auquel est fixé le tronçon (19) d'extrémité supérieure de la tige télescopique (18) ;
- une contre-butée (200) qui est fixée au tronçon (19, 17) d'extrémité supérieure de la tige télescopique (18), au-dessus de l'élément radialement intérieur (44) de fixation de l'ensemble de filtration (36) et qui est apte à coopérer avec une portion de face supérieure en vis-à-vis de l'élément structurel (22, 23) ;
ladite jambe de force comportant un support multifonctions (60) en une seule pièce qui comporte :
- une cavité de filtration (66) ouverte axialement vers le haut dans laquelle est fixée l'enveloppe extérieure (40) de l'ensemble de filtration (36) ;
- une cavité de choc (68) ouverte axialement vers le bas dans laquelle est monté le tronçon supérieur (37) du bloc de choc (38) ;
- un logement (70) dans lequel est montée la butée tournante (30) ;
- le support multifonctions (60) comportant un bossage latéral (73) d'appui axial du support multifonctions (60) qui est apte à coopérer avec une portion de face inférieure en vis-à-vis de l'élément structurel (22, 23), et telle que la jambe de force (12) comporte un élément supérieur (94) qui applique un effort de précontrainte au bloc filtrant (42).

2. Jambe de force selon la revendication 1, **caractérisée en ce que** le support multifonctions (60) comporte :
- un fut cylindrique de filtration (74), ouvert axialement vers le haut, qui est constitué d'une jupe cylindrique latérale et d'une cloison radiale (76) qui délimitent latéralement et axialement vers le bas la cavité de filtration (66), et dont la cloison radiale est percée centralement pour le passage du tronçon (19) d'extrémité supérieure de la tige télescopique (18) ;
- un fut cylindrique de choc (80), ouvert axialement vers le bas, qui est constitué d'une jupe cylindrique latérale et de ladite cloison radiale (76) qui délimitent latéralement et axialement vers le haut la cavité de choc (68) ;
- le bossage latéral (73) d'appui axial du support multifonctions (60) sur l'élément structurel (22, 23), qui s'étend radialement vers l'extérieur depuis le fut cylindrique de filtration( 74) ;
- une collerette latérale (71) qui s'étend radialement vers l'extérieur, dont une face inférieure délimite axialement vers le haut le logement latéral (70) et en vis à vis de laquelle est agencée la bague supérieure (31) de la butée tournante (30) ;
- une pièce annulaire complémentaire (32) qui est rapportée sous la collerette latérale (71) et qui, avec la collerette latérale (71), délimite le logement (70).

3. Jambe de force selon la revendication 1, **caractérisée en ce que** le support multifonctions (60) comporte :
- un fut cylindrique de filtration (74), ouvert axialement vers le haut, qui est constitué d'une jupe cylindrique latérale qui délimite latéralement la cavité de filtration (68);
- un fut cylindrique de choc (80), ouvert axialement vers le bas, qui est constitué d'une jupe cylindrique latérale et d'une face annulaire supérieure qui délimite latéralement et axialement vers le haut la cavité de choc (68) ;
- le bossage latéral (73) d'appui axial du support multifonctions (60) sur l'élément structurel (22, 23), qui s'étend radialement vers l'extérieur depuis le fut cylindrique de filtration (74) ;
- une collerette latérale (71) qui s'étend radialement vers l'intérieur, dont une face inférieure délimite axialement vers le haut le logement latéral (70) et en vis à vis de laquelle est agencée la bague supérieure (31) de la butée tournante (30) ;
- une pièce annulaire complémentaire (32) qui est rapportée sous la collerette latérale (71) et qui, avec la collerette latérale (71), délimite le logement latéral (70).

4. Jambe de force selon l'une des revendications 2 ou 3, **caractérisée en ce que** la butée tournante (30) est agencée axialement en-dessous de la cavité de filtration (66).

5. Jambe de force selon la revendication 2, **caractérisée en ce que** la cavité de choc comporte des moyens de fixation du tronçon supérieur (37) du bloc de choc (38).

6. Jambe de force selon la revendication 3, **caractérisée en ce que** le bloc de choc (38) est réalisé en une seule pièce avec le bloc filtrant (42) qu'il prolonge axialement vers le bas.

7. Jambe de force selon l'une des revendications 2 ou 3, **caractérisée en ce que** l'élément supérieur (94) qui applique un effort de précontrainte au bloc filtrant (42).est une rondelle qui est fixée, par exemple par emboîtement élastique, sur l'extrémité supérieure du fut de filtration (74) et dont la face inférieure applique un effort de précontrainte au bloc filtrant (42).

8. Jambe de force selon l'une des revendications 2 ou 3, **caractérisée en ce que** l'élément supérieur qui applique un effort de précontrainte au bloc filtrant (42) est une portion annulaire de l'élément structurel (22, 23) dont la face inférieure applique un effort de précontrainte au bloc filtrant (42).

9. Jambe de force selon l'une des revendications 2 ou 3, caractérisée ne ce que la butée tournante (30) est une butée à billes (37) qui est logée dans le logement (70) entre la collerette latérale (71) et la pièce annulaire complémentaire (32) qui est rapportée sous la collerette latérale (71).

10. Jambe de force selon la revendication 2, **caractérisée en ce que** la butée tournante (30) est une butée à billes (37) qui est logée verticalement en-dessous et au droit du bloc filtrant (42).

11. Jambe de force selon l'une quelconque des revendications précédentes, **caractérisée en ce que** l'enveloppe cylindrique (40) radialement extérieure de l'ensemble de filtration (36) est une douille qui est montée sertie axialement à l'intérieur du fut de filtration (74) du support multifonctions (60).

## Patentansprüche

1. Federbein (12) zur Ausstattung einer Radaufhängung eines Kraftfahrzeugs, wobei das Federbein (12) Folgendes aufweist:
- einen Stoßdämpfer (16), der mit einer axialen Teleskopstange (18) ausgestattet ist, die einen oberen Endabschnitt (19) aufweist, der mit einem Strukturelement (22, 23) des Kraftfahrzeugs zusammenwirkt;
- eine Schraubenfeder (24), welche die Teleskopstange (18) umgibt;
- einen oberen Federteller (28) zur axialen Abstützung des oberen Endes der Schraubenfeder (24);
- einen Drehanschlag (30), der axial zwischen dem oberen Federteller (28) und dem Strukturelement (22, 23) angeordnet ist und der einen oberen Ring (31), der bezüglich des Strukturelements (22, 23) ortsfest ist, und einen drehbaren unteren Ring (29), der die Kraft der Schraubenfeder (24) aufnimmt, aufweist;
- einen Stoßblock (38), der die Teleskopstange (18) umgibt und von dem ein oberer Abschnitt (37) seine Kraft auf das Strukturelement (22, 23) überträgt;
- eine Filteranordnung (36), welche eine radial äußere zylindrische Hülle (40), die an dem Strukturelement (22, 23) befestigt ist, einen dazwischenliegend angeordneten Filterblock (42) und ein radial inneres Befestigungselement (44), an dem der obere Endabschnitt (19) der Teleskopstange (18) befestigt ist, aufweist;
- ein Gegenlager (200), das am oberen Endabschnitt (19, 17) der Teleskopstange (18) über dem radial inneren Befestigungselement (44) der Filteranordnung (36) befestigt ist und geeignet ist, mit einem Teil der Oberseite gegenüber dem Strukturelement (22, 23) zusammenzuarbeiten;
wobei das Federbein einen einstückigen Multifunktionsträger (60) aufweist, der Folgendes aufweist:
- einen axial nach oben offenen Filtrationshohlraum (66), in dem die äußere Hülle (40) der Filteranordnung (36) befestigt ist;
- einen axial nach unten offenen Stoßhohlraum (68), in dem der obere Abschnitt (37) des Stoßblocks (38) angebracht ist;
- eine Aufnahme (70), in welcher der Drehanschlag (30) angebracht ist;
- wobei der Multifunktionsträger (60) eine seitliche Erhebung (73) zur axialen Abstützung des Multifunktionsträgers (60) aufweist, die geeignet ist, mit einem Teil der Unterseite gegenüber dem Strukturelement (22, 23) zusammenzuarbeiten, und wobei das Federbein (12) ein oberes Element (94) aufweist, das eine Vorspannkraft auf den Filterblock (42) ausübt.

2. Federbein nach Anspruch 1, **dadurch gekennzeichnet, dass** der Multifunktionsträger (60) Folgendes aufweist:
- eine axial nach oben offene zylindrische Filtrationshülse (74), die aus einem seitlichen zylindrischen Mantel und einer radialen Trennwand (76) besteht, die den Filtrationshohlraum (66) seitlich und axial nach unten begrenzen, und deren radiale Trennwand für den Durchgang des oberen Endabschnitts (19) der Teleskopstange (18) mittig durchbohrt ist;
- eine axial nach unten offene zylindrische Stoßhülse (80), die aus einem seitlichen zylindrischen Mantel und der radialen Trennwand (76) besteht, die den Stoßhohlraum (68) seitlich und axial nach oben begrenzen;
- die seitliche Erhebung (73) zur axialen Abstützung des Multifunktionsträgers (60) am Strukturelement (22, 23), die sich von der zylindrischen Filtrationshülse (74) radial nach außen erstreckt;
- einen seitlichen Spannkragen (71), der sich radial nach außen erstreckt, von dem eine Unterseite die seitliche Aufnahme (70) axial nach oben begrenzt und gegenüber von dem der obere Ring (31) des Drehanschlags (30) angeordnet ist;
- ein komplementäres ringförmiges Teil (32), das unter dem seitlichen Spannkragen (71) angebracht ist und das mit dem seitlichen Spannkragen (71) die Aufnahme (70) begrenzt.

3. Federbein nach Anspruch 1, **dadurch gekennzeichnet, dass** der Multifunktionsträger (60) Folgendes aufweist:
- eine axial nach oben offene zylindrische Filtrationshülse (74), die aus einem seitlichen zylindrischen Mantel besteht, der den Filtrationshohlraum (68) seitlich begrenzt;
- eine axial nach unten offene zylindrische Stoßhülse (80), die aus einem seitlichen zylindrischen Mantel und einer ringförmigen Oberseite besteht, die den Stoßhohlraum (68) seitlich und axial nach oben begrenzt;
- die seitliche Erhebung (73) zur axialen Abstützung des Multifunktionsträgers (60) am Strukturelement (22, 23), die sich von der zylindrischen Filtrationshülse (74) radial nach außen erstreckt;
- einen seitlichen Spannkragen (71), der sich radial nach innen erstreckt, von dem eine Unterseite die seitliche Aufnahme (70) axial nach oben begrenzt und gegenüber von dem der obere Ring (31) des Drehanschlags (30) angeordnet ist;
- ein komplementäres ringförmiges Teil (32), das unter dem seitlichen Spannkragen (71) angebracht ist und das mit dem seitlichen Spannkragen (71) die seitliche Aufnahme (70) begrenzt.

4. Federbein nach einem der Ansprüche 2 oder 3, **dadurch gekennzeichnet, dass** der Drehanschlag (30) axial unterhalb des Filtrationshohlraums (66) angeordnet ist.

5. Federbein nach Anspruch 2, **dadurch gekennzeichnet, dass** der Stoßhohlraum Mittel zum Befestigen des oberen Abschnitts (37) des Stoßblocks (38) aufweist.

6. Federbein nach Anspruch 3, **dadurch gekennzeichnet, dass** der Stoßblock (38) aus einem Stück mit dem Filterblock (42) besteht, den er axial nach unten verlängert.

7. Federbein nach einem der Ansprüche 2 oder 3, **dadurch gekennzeichnet, dass** das obere Element (94), das eine Vorspannkraft auf den Filterblock (42) ausübt, eine Unterlegscheibe ist, die beispielsweise durch elastisches Einrasten am oberen Ende der Filtrationshülse (74) befestigt ist und deren Unterseite eine Vorspannkraft auf den Filterblock (42) ausübt.

8. Federbein nach einem der Ansprüche 2 oder 3, **dadurch gekennzeichnet, dass** das obere Element, das eine Vorspannkraft auf den Filterblock (42) ausübt, ein ringförmiger Abschnitt des Strukturelements (22, 23) ist, dessen Unterseite eine Vorspannkraft auf den Filterblock (42) ausübt.

9. Federbein nach einem der Ansprüche 2 oder 3, **dadurch gekennzeichnet, dass** der Drehanschlag (30) ein Druckkugellager (37) ist, das in der Aufnahme (70) zwischen dem seitlichen Spannkragen (71) und dem komplementären ringförmigen Teil (32) untergebracht ist, das unter dem seitlichen Spannkragen (71) angebracht ist.

10. Federbein nach Anspruch 2, **dadurch gekennzeichnet, dass** der Drehanschlag (30) ein Druckkugellager (37) ist, das senkrecht unterhalb und rechts des Filterblocks (42) untergebracht ist.

11. Federbein nach einem der vorhergehenden Ansprüche, **dadurch gekennzeichnet, dass** die radial äußere zylindrische Hülle (40) der Filteranordnung (36) eine Buchse ist, die durch axiales Einpressen im Inneren der Filtrationshülse (74) des Multifunktionsträgers (60) angebracht ist.

## Claims

1. Strut (12) intended to be fitted as part of a suspension for a motor vehicle wheel, the strut (12) comprising:
- a shock absorber (16) equipped with a telescopic axial rod (18) comprising an upper end section (19) which collaborates with a structural element (22, 23) of the motor vehicle;
- a helical spring (24) which surrounds the telescopic rod (18);
- an upper cup (28) for axially bearing the upper end of the helical spring (24);
- a rotary thrust bearing (30) which is axially interposed between the upper cup (28) and the structural element (22, 23), and which comprises an upper ring (31) which is fixed with respect to the structural element (22, 23) and a rotating lower ring (29) which receives the force of the helical spring (24);
- a shock block (38) which surrounds the telescopic rod (18) and of which an upper section (37) transmits its force to the structural element (22, 23);
- a filtration assembly (36) which comprises a radially outer cylindrical envelope (40) which is fastened to the structural element (22, 23), an intermediate filtering block (42), and a radially inner fixing element (44) to which the upper end section (19) of the telescopic rod (18) is fastened;
- a counter-thrust bearing (200) which is fixed to the upper end section (19, 17) of the telescopic rod (18), above the radially inner fixing element (44) of the filtration assembly (36) and which is able to collaborate with an upper-face portion, that faces it, belonging to the structural element (22, 23);
said strut comprising a one-piece multifunctional support (60) which comprises:
- an axially upwardly open filtration cavity (66) in which the outer envelope (40) of the filtration assembly (36) is fastened;
- an axially downwardly open shock cavity (68) in which the upper section (37) of the shock block (38) is mounted;
- a housing (70) in which the rotary thrust bearing (30) is mounted;
- the multifunctional support (60) comprising a lateral boss (73) via which the multifunctional support (60) bears axially, which is able to collaborate with a lower-face portion, that faces it, belonging to the structural element (22, 23) and such that the strut (12) comprises an upper element (94) which applies a preloading force to the filtering block (42).

2. Strut according to Claim 1, **characterized in that** the multifunctional support (60) comprises:
- an axially upwardly open cylindrical filtration barrel (74) which consists of a lateral cylindrical skirt and of a lower radial partition (76) which laterally and axially downwardly delimit the filtration cavity (66), and of which the radial partition is pierced centrally for the passage of the upper end section (19) of the telescopic rod (18);
- an axially downwardly open cylindrical shock barrel (80) which consists of a lateral cylindrical skirt and of said radial partition (76) which laterally and axially upwardly delimit the shock cavity (68);
- the lateral boss (73) via which the multifunctional support (60) bears axially on the structural element (22, 23), which extends radially outwardly from the cylindrical filtration barrel (74);
- a lateral collar (71) which extends radially outwardly, of which a lower face axially upwardly delimits the lateral housing (70) and facing which is arranged the upper ring (31) of the rotary thrust bearing (30);
- a complementary annular part (32) which is attached below the lateral collar (71) and which, with the lateral collar (71), delimits the housing (70).

3. Strut according to Claim 1, **characterized in that** the multifunctional support (60) comprises:
- an axially upwardly open cylindrical filtration barrel (74) which consists of a lateral cylindrical skirt which laterally delimits the filtration cavity (68);
- an axially downwardly open cylindrical shock barrel (80) which consists of a lateral cylindrical skirt and of an annular upper face which laterally and axially upwardly delimits the shock cavity (68);
- the lateral boss (73) via which the multifunctional support (60) bears axially on the structural element (22, 23), which extends radially outwardly from the cylindrical filtration barrel (74);
- a lateral collar (71), which extends radially inwardly, of which a lower face axially upwardly delimits the lateral housing (70) and facing which is arranged the upper ring (31) of the rotary thrust bearing (30);
- a complementary annular part (32) which is attached below the lateral collar (71) and which, with the lateral collar (71), delimits the lateral housing (70).

4. Strut according to one of Claims 2 or 3, **characterized in that** the rotary thrust bearing (30) is arranged axially beneath the filtration cavity (66).

5. Strut according to Claim 2, **characterized in that** the shock cavity comprises means for attaching the upper section (37) of the shock block (38).

6. Strut according to Claim 3, **characterized in that** the shock block (38) is produced as a single piece with the filtering block (42) that it extends axially downwards.

7. Strut according to one of Claims 2 or 3, **characterized in that** the upper element (94) which applies a preloading force to the filtering block (42) is a washer which is fastened, for example by elastic fitting, on the upper end of the filtration barrel (74) and of which the lower face applies a preloading force to the filtering block (42).

8. Strut according to one of Claims 2 or 3, **characterized in that** the upper element which applies a preloading force to the filtering block (42) is an annular portion of the structural element (22, 23) of which the lower face applies a preloading force to the filtering block (42).

9. Strut according to one of Claims 2 or 3, **characterized in that** the rotary thrust bearing (30) is a thrust ball bearing (37) which is housed in the housing (70) between the lateral collar (71) and the complementary annular part (32) which is attached below the lateral collar (71).

10. Strut according to Claim 2, **characterized in that** the rotary thrust bearing (30) is a thrust ball bearing (37) which is housed vertically beneath and in line with the filtering block (42).

11. Strut according to any one of the preceding claims, **characterized in that** the radially outer cylindrical envelope (40) of the filtration assembly (36) is a sleeve which is mounted crimped axially inside the filtration barrel (74) of the multifunctional support (60).
